(19) **Europäisches Patentamt**
**European Patent Office**
**Office européen des brevets**

(11) **EP 4 600 976 A1**

(12) **EUROPEAN PATENT APPLICATION**
published in accordance with Art. 153(4) EPC

(43) Date of publication:
**13.08.2025 Bulletin 2025/33**

(21) Application number: **23874745.5**

(22) Date of filing: **28.09.2023**

(51) International Patent Classification (IPC):
**H01B 13/00** (2006.01)     **C01B 25/14** (2006.01)
**H01G 11/56** (2013.01)     **H01M 10/0562** (2010.01)

(52) Cooperative Patent Classification (CPC):
**C01B 25/14; H01B 13/00; H01G 11/56;**
**H01M 10/0562; Y02E 60/10**

(86) International application number:
**PCT/JP2023/035340**

(87) International publication number:
**WO 2024/075618 (11.04.2024 Gazette 2024/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.10.2022 JP 2022162269**

(71) Applicant: **Idemitsu Kosan Co.,Ltd.**
**Tokyo 100-8321 (JP)**

(72) Inventors:
• **SEINO, Yoshikatsu**
  **Tokyo 100-8321 (JP)**
• **KANEKO, Yasunobu**
  **Tokyo 100-8321 (JP)**

(74) Representative: **Vossius & Partner**
**Patentanwälte Rechtsanwälte mbB**
**Siebertstrasse 3**
**81675 München (DE)**

(54) **SULFIDE SOLID ELECTROLYTE MANUFACTURING METHOD**

(57) Provided is a method for producing a sulfide solid electrolyte, the method including a first step of mixing a raw material-containing substance that contains a lithium atom, a phosphorus atom, a sulfur atom, and a halogen atom in an organic solvent to prepare a mixture, a second step of irradiating the mixture with a microwave of 0.5 to 700 W/g to heat the mixture to 50 to 360°C, and a third step of cooling the mixture to 20 to 70°C, the second and third steps being repeated 2 to 50 times. In the method for producing a sulfide solid electrolyte, a liquid phase method is adopted with a lowered heating temperature, and a sulfide solid electrolyte that has a particle size maintained by suppressing granulation caused by heating and further has a high quality can be efficiently produced.

EP 4 600 976 A1

## Description

Technical Field

The present invention relates to a method for producing a sulfide solid electrolyte.

Background Art

With rapid spread of information-related devices, communication devices, and so on, such as personal computers, video cameras, and mobile phones, in recent years, development of batteries that are utilized as a power source therefor is considered to be important. Above all, from the viewpoint of high energy density, lithium ion batteries attract attention.

Since an electrolytic solution containing a flammable organic solvent has heretofore been used in batteries to be used for such an application, it has been required to install a safety unit that suppresses temperature rising in short circuit and to improve the structure and material for preventing short circuit. Against the background, development of a battery having a solid electrolyte layer in place of an electrolytic solution is being made in view of the fact that by replacing an electrolytic solution with a solid electrolyte to make the battery fully solid, simplification of a safety unit can be achieved without using a flammable organic solvent within the battery and the battery is excellent in manufacturing costs and productivity.

Methods for producing a solid electrolyte to be used in a solid electrolyte layer are roughly divided into solid phase methods and liquid phase methods, and the liquid phase methods include homogeneous methods in which solid electrolyte materials are completely dissolved in a solvent and heterogeneous methods in which solid electrolyte materials are not completely dissolved but a suspension in which solid and liquid coexist is used.

For example, as a solid phase method, a method is known in which raw materials, such as lithium sulfide and diphosphorus tetrasulfide, are subjected to a mechanical milling treatment with an apparatus, such as a ball mill or a bead mill, and are subjected to a heat treatment as needed, to produce an amorphous or crystalline solid electrolyte (see, for example, PTL 1). As a homogeneous method among the liquid phase methods, a method is known in which a solid electrolyte is dissolved in a solvent and then, is re-precipitated (see, for example, PTL 2). As a heterogeneous method, a method is known in which solid electrolyte raw materials such as lithium sulfide are reacted in a solvent containing a polar aprotic solvent (see, for example, PTLs 3 and 4, and NPL 1).

In addition, as a method for producing a solid electrolyte, PTL 5 and NPLs 2 and 3 disclose production of an amorphous electrolyte having a composition of $Li_3PS_4$ by irradiating lithium sulfide and diphosphorus pentasulfide with a microwave in an organic solvent.

Citation List

Patent Literature

PTL 1: WO 2017/159667
PTL 2: JP 2014-191899 A
PTL 3: WO 2014/192309
PTL 4: WO 2018/054709
PTL 5: JP 2020-15661 A

Non-patent Literature

NPL 1: "CHEMISTRY OF MATERIALS", 2017, No. 29, p. 1830-1835
NPL 2: "Journal of Materials Chemistry A", 2018, No. 6, p. 21261-21265
NPL 3: "Journal of Materials Chemistry A", 2018, No. 9, p. 400-405

Summary of Invention

Technical Problem

The present invention has been made in view of such a situation, and has an object to provide a method for producing a sulfide solid electrolyte in which a liquid phase method is adopted with a lowered heating temperature and by which a sulfide solid electrolyte that has a particle size maintained by suppressing granulation caused by heating and further has a high quality can be efficiently produced.

Solution to Problem

The method for producing a sulfide solid electrolyte according to the present invention is
a method for producing a sulfide solid electrolyte, the method including a first step of mixing a raw material-containing substance that contains a lithium atom, a phosphorus atom, a sulfur atom, and a halogen atom in an organic solvent to prepare a mixture, a second step of irradiating the mixture with a microwave of 0.5 to 700 W/g to heat the mixture to 50 to 360°C, and a third step of cooling the mixture to 20 to 70°C, the second and third steps being repeated two to 50 times.

Advantageous Effects of Invention

According to the present invention, it is possible to provide a method for producing a sulfide solid electrolyte in which a liquid phase method is adopted with a lowered heating temperature and by which a sulfide solid electrolyte that has a particle size maintained by suppressing granulation caused by heating and further has a high quality can be efficiently produced.

Brief Description of Drawings

[Fig. 1] Fig 1 shows an X-ray diffraction spectrum of a sulfide solid electrolyte obtained in Example 1.
[Fig. 2] Fig. 2 shows an X-ray diffraction spectrum of a sulfide solid electrolyte obtained in Example 2.
[Fig. 3] Fig. 3 shows an X-ray diffraction spectrum of a sulfide solid electrolyte obtained in Example 3.
[Fig. 4] Fig. 4 shows an X-ray diffraction spectrum of a sulfide solid electrolyte obtained in Example 4.
[Fig. 5] Fig. 5 shows an X-ray diffraction spectrum of a sulfide solid electrolyte obtained in Comparative Example 1.

Description of Embodiments

An embodiment (hereinafter sometimes referred to as "this embodiment") of the present invention will be described below. In the present description, the upper limit values and the lower limit values relating to the numerical ranges accompanied with "or more", "or less", and "to" are numerical values that can be combined in any combination, and the values in Examples can also be used as an upper limit value or a lower limit value.

(Findings that the present inventors have acquired to achieve the present invention)

As a result of intensive and extensive studies for solving the above problem, the present inventors have found the following matters, thus completing the present invention.

A solid method mainly utilizes a solid phase reaction and is characterized in that a solid electrolyte is liable to be produced in a high purity so that a high ionic conductivity is liable to be achieved, but such a method is not suited to mass production. Aiming at a practical use of an all-solid battery in the near future, the scale-up of the production (mass production) in view of an industrial production has been studied, and as a method that not only has a versatility and applicability but also enables synthesis by a simple manner in a large amount, a liquid phase method has attracted attention.

In a liquid phase method, in general, calcination is performed for the purpose of enhancing the crystallinity of the sulfide solid electrolyte, for example. In particular, in the case of producing a sulfide solid electrolyte having an argyrodite-type crystal structure, calcination at a high temperature of about 400°C is needed. When calcination is performed at such a high temperature, granulation occurs to increase the particle size as compared with before calcination and a pulverization treatment is sometimes needed, resulting in an increased cost of the sulfide solid electrolyte. In addition, when calcination at a high temperature is needed, a problem of, for example, promoted corrosion of the reaction equipment may occur, sometimes leading to an increased cost of the sulfide solid electrolyte due to an increased cost of equipment.

The present inventors have focused on the fact that, in the conventional methods for producing a sulfide solid electrolyte by a liquid phase method as disclosed in PTLs 2 to 4, NPL 1, and the like, any study of calcination has not been made and the problem of granulation due to calcination at a high temperature which leads to an increase in the particle size has not been raised at all. In addition, when a sulfide solid electrolyte having an argyrodite-type crystal structure, among sulfide solid electrolytes, is to be obtained, calcination at a high temperature is inevitable as is known from the conventional production methods by a liquid phase method as disclosed in the documents and the production method described in NPL 3.

Thus, as a result of an intensive and extensive studies particularly on an operation of calcination in a method for producing a sulfide solid electrolyte, the present inventors have found that, by irradiating a mixture obtained by mixing a raw material-containing substance in an organic solvent with a microwave, the heating temperature can be kept low and granulation caused by heating can be suppressed. The lowering of the heating temperature not only leads to a reduction in the energy for heating but also leads to a reduction in the cost of equipment as described above. When granulation caused by heating can be suppressed to maintain the particle size, a pulverization treatment after heating is not needed, which is highly effective for achieving efficient production and reducing the cost.

In PTL 5 and NPLs 2 and 3, irradiation with a microwave in a sulfide solid electrolyte is described. However, in all the production methods disclosed in the documents, the microwave irradiation is adopted in producing an electrolyte having a composition of $Li_3PS_4$ (lithium thiophosphate) by using $Li_2S$ and $P_2S_5$, but microwave irradiation on a substance containing a halogen atom is not performed. In PTL 5 and NPL 2, production of an amorphous sulfide solid electrolyte by microwave irradiation is described, but a crystalline sulfide solid electrolyte, for example, having an argyrodite-type crystal structure, is not produced. NPL 3 states that while microwave irradiation is performed as described above, calcination at a high temperature is also performed.

Accordingly, the fact that, by a significantly simple operation of microwave irradiation in place of an operation of calcination in conventional production methods, a heating temperature can be lowered and a sulfide solid electrolyte that has a particle size maintained by suppressing granulation caused by heating can be produced is a surprising phenomenon in light of the conventional production methods.

In the present description, the term "solid electrolyte" means an electrolyte that maintains a solid state at 25°C under nitrogen atmosphere. The "sulfide solid electrolyte" obtained by the production method of this embodiment means a solid electrolyte that contains an alkali metal atom, a sulfur atom, a phosphorus atom, and a halogen atom and has an ionic conductivity due to the alkali metal atom, such as a lithium atom. The "sulfide solid electrolyte" may contain a metal atom, such as Ge, Na, K, Mg, Ca, Al, Si, Sb, Ti, or Zr.

In the present description, the term "sulfide solid electrolyte" encompasses both of a crystalline sulfide solid electrolyte and an amorphous sulfide solid electrolyte. In the present description, the crystalline sulfide solid electrolyte is a solid electrolyte that gives peaks derived from a solid electrolyte in an X-ray diffraction pattern in a X-ray diffraction measurement regardless of the presence or absence of a peak derived from a raw material of the solid electrolyte therein. In other words, the crystalline solid electrolyte contains a crystal structure derived from a solid electrolyte, and a part thereof may have a crystal structure derived from the solid electrolyte or the whole thereof may have a crystal structure derived from the solid electrolyte. The crystalline sulfide solid electrolyte may contain an amorphous sulfide solid electrolyte (also referred to as "glass component") as a part thereof as long as it has such an X-ray diffraction pattern as above. Accordingly, the crystalline sulfide solid electrolyte encompasses a so-called glass ceramic which is obtained by heating an amorphous solid electrolyte (glass component) to the crystallization temperature or higher.

In the present description, the amorphous sulfide solid electrolyte (glass component) means one having a halo pattern that does not substantially give any other peak than the peaks derived from the materials in an X-ray diffraction pattern in an X-ray diffraction measurement regardless of the presence or absence of a peak derived from a raw material of the solid electrolyte.

[Method for producing sulfide solid electrolyte]

A method for producing a sulfide solid electrolyte according to a first aspect of this embodiment is a method for producing a sulfide solid electrolyte, the method including a first step of mixing a raw material-containing substance that contains a lithium atom, a phosphorus atom, a sulfur atom, and a halogen atom in an organic solvent to prepare a mixture, a second step of irradiating the mixture with a microwave of 0.5 to 700 W/g to heat the mixture to 50 to 360°C, and a third step of cooling the mixture to 20 to 70°C, the second and third steps being repeated 2 to 50 times.

Conventionally, in producing particularly a crystalline sulfide solid electrolyte, a step of crystallization by calcination has been needed. Above all, in producing a sulfide solid electrolyte having an argyrodite-type crystal structure, since the heating temperature in calcination is to be an extremely high temperature of about 400°C, an increase in the cost of equipment, an increase in particle size due to granulation, consumption of energy for heating, and the like may occur as described above. Then, the present inventors have focused on heating by microwave irradiation, regarding the operation of calcination.

In heating by microwave irradiation, an object substance is irradiated with a microwave to increase the temperature of the substance. The present inventors wondered if the temperature as a whole of the reaction system can be suppressed by selectively heating and reacting a raw material-containing substance containing substances which are raw materials of a sulfide solid electrolyte by taking an advantage of an action of microwave irradiation to heat an object substance. Then, they wondered if the temperature as a whole of the reaction system can be suppressed by selectively heating a raw material-containing substance by microwave irradiation in an organic solvent to absorb the heat of the raw material-containing substance by the organic solvent.

In addition, the present inventors have found that the reaction between the solid electrolyte raw materials contained in the raw material-containing substance does not sufficiently proceed only by keeping the temperature of the raw material-containing substance high, and that the reaction between the solid electrolyte raw materials is promoted during irradiating the raw material-containing substance with a specific high-output microwave, thus completing the present invention.

The production method of this embodiment is a production method in which by only an extremely simple operation of irradiation with a microwave at a specific output, not only a sulfide solid electrolyte can be obtained while lowering the heating temperature, but also a sulfide solid electrolyte that has a particle size maintained by suppressing granulation caused by heating and that further has a high quality can be obtained. Thus, the lowering of the heating temperature leads not only to a reduction in the cost of equipment but also to a reduction in the consumption of energy for heating. In addition, by suppressing granulation caused by heating to maintain the particle size, a pulverization treatment after heating is not needed. As a result, the production method of this embodiment increases the efficiency of the production of a sulfide solid electrolyte, and can provide a sulfide solid electrolyte having a high quality while reducing the cost.

A method for producing a sulfide solid electrolyte according to a second aspect of this embodiment is the method for producing a sulfide solid electrolyte according to the first aspect, in which the method includes, after the second step, a temperature keeping step of irradiating the mixture with a microwave to keep a temperature of 80 to 360°C for 1 to 300 minutes, which is followed by the third step.

By keeping the mixture at a prescribed temperature in the temperature keeping step, a reaction between solid electrolyte raw materials is promoted to produce a sulfide solid electrolyte of a higher quality in an efficient manner.

A method for producing a sulfide solid electrolyte according to a third aspect of this embodiment is the method for producing a sulfide solid electrolyte according to the first or second aspect, in which the organic solvent has a dielectric loss factor at 25°C of 10.0 or less.

In the third aspect, an organic solvent having a prescribed dielectric loss factor is adopted as the organic solvent.

The energy loss when a substance is placed in an electromagnetic field generated by microwave irradiation is the total of a conduction loss, a dielectric loss, and a magnetic loss, and when a liquid is placed in an electromagnetic field generated by microwave irradiation, a dielectric loss is generated to convert the energy of the electric field to a thermal energy, which generates heat. That is, the lower the dielectric loss is, the more efficiently the energy of the microwave irradiation can be consumed for the raw material-containing substance.

The dielectric loss factor is a loss factor that is proportional to the dielectric loss, and the dielectric loss factor and the dielectric loss are in the following relation.

$$\text{Dielectric loss} = \pi f \varepsilon_0 \varepsilon'' |E|^2$$

(f: frequency (1/sec), $\varepsilon_0$: permittivity of vacuum, $\varepsilon''$: dielectric loss factor of the substance, $|E|$: electrical field (V/m))

Thus, the dielectric loss factor is a measure indicating the easiness of heating by a microwave, and the lower the dielectric loss factor is, the lower the dielectric loss becomes. Accordingly, when the dielectric loss factor of the organic solvent used in the production method of this embodiment is 10.0 or less, the raw material-containing substance can be more selectively heated, making it possible to more efficiently produce a sulfide solid electrolyte.

A method for producing a sulfide solid electrolyte according to a fourth aspect of this embodiment is the method for producing a sulfide solid electrolyte according to any one of the first to third aspects in which the organic solvent has a boiling point of 50°C or higher.

In the fourth aspect, an organic solvent having a prescribed boiling point is adopted as the organic solvent.

The higher the boiling point of the organic solvent is, the more suppressed the amount of the organic solvent volatilized can be in selectively heating the raw material-containing substance and the more uniformly the raw material-containing substance can be maintained in the organic solvent. Thus, the raw material-containing substance is liable to be selectively heated and the amount of the organic solvent used can be reduced.

A method for producing a sulfide solid electrolyte according to a fifth aspect of this embodiment is the method for producing a sulfide solid electrolyte according to any one of the first to fourth aspects in which the organic solvent is an aromatic solvent.

In the fifth aspect, an aromatic solvent, i.e., an organic solvent having an aromatic ring is adopted as the organic solvent.

An aromatic solvent which is an organic solvent having an aromatic ring tends to satisfy the properties in the second and third aspects, specifically, the dielectric loss factor and the boiling point. Thus, it is possible to more efficiently produce a sulfide solid electrolyte.

A method for producing a sulfide solid electrolyte according to a sixth aspect of this embodiment is the method for producing a sulfide solid electrolyte according to any one of the first to fifth aspects in which the raw material-containing substance is contained in the mixture in an amount of 1% by mass or more and 20% by mass or less.

In the sixth aspect, the content of the raw material-containing substance in the mixture is within a prescribed range. The amount of the organic solvent used can be reduced, making it possible to more efficiently produce a sulfide solid electrolyte.

A method for producing a sulfide solid electrolyte according to a seventh aspect of this embodiment is the method for producing a sulfide solid electrolyte according to any one of the first to sixth aspects in which in the second step, the mixture is irradiated with a microwave of 130 to 700 W/g.

In the seventh aspect, the output of the microwave for irradiation in the second step is within a prescribed range. According to the seventh aspect, the reaction between the solid electrolyte raw materials is efficiently promoted to provide a sulfide solid electrolyte having a higher quality.

A method for producing a sulfide solid electrolyte according to an eighth aspect of this embodiment is the method for producing a sulfide solid electrolyte according to any one of the first to seventh aspects in which in the second step, the mixture is heated to 150 to 360°C.

A method for producing a sulfide solid electrolyte according to a nineth aspect of this embodiment is the method for producing a sulfide solid electrolyte according to any one of the second to eighth aspects in which in the temperature keeping step, the mixture is heated to 150 to 360°C.

In the eighth aspect, the mixture is heated to a temperature within a prescribed range. In the nineth aspect, the temperature of the mixture is kept within a prescribed range.

As described above, for example, when a sulfide solid electrolyte having an argyrodite-type crystal structure is to be produced, according to a conventional production method, calcination at a high temperature of about 400°C is needed. However, according to the production method of this embodiment, it is possible to produce a sulfide solid electrolyte having an argyrodite-type crystal structure even in a condition of a low temperature of 150°C or higher and 360°C or lower.

A method for producing a sulfide solid electrolyte according to a tenth aspect of this embodiment is the method for producing a sulfide solid electrolyte according to any one of the first to nineth aspects in which in the temperature keeping step, the mixture is kept at the temperature for 1 to 240 minutes.

In the tenth aspect, the time period during which the temperature of the mixture is kept in the range in the temperature keeping step is within a prescribed range. By the time period during which the temperature of the mixture is kept being within a prescribed range, it is possible to produce a sulfide solid electrolyte having a superior quality in a more efficient manner.

A method for producing a sulfide solid electrolyte according to an eleventh aspect of this embodiment is

the method for producing a sulfide solid electrolyte according to any one of the first to tenth aspects in which the second and third steps is repeated 2 to 20 times.

In the eleventh aspect, the number of repetitions of the second and third steps is within a prescribed range from the viewpoint of both achieving the productivity and the quality of the sulfide solid electrolyte.

A method for producing a sulfide solid electrolyte according to a twelfth aspect of this embodiment is the method for producing a sulfide solid electrolyte according to any one of the first to eleventh aspects in which the sulfide solid electrolyte is a crystalline sulfide solid electrolyte having an argyrodite-type crystal structure.

In the twelfth aspect, the produced sulfide solid electrolyte is a sulfide solid electrolyte having an argyrodite-type crystal structure. As described above, for a sulfide solid electrolyte having an argyrodite-type crystal structure, calcination at a high temperature of about 400°C is needed according to a conventional production method. However, according to the production method of this embodiment, it is possible to reduce the heating temperature to 50°C or higher and 360°C or lower. That is, in production of a sulfide solid electrolyte having an argyrodite-type crystal structure, it is possible to further take the advantage of the characteristics of the production method of this embodiment.

[Preparing a mixture]

The production method of this embodiment includes mixing a raw material-containing substance containing a lithium atom, a phosphorus atom, a sulfur atom, and a halogen atom in an organic solvent to prepare a mixture. Hereinafter, preparing a mixture will be described in order from the raw material-containing substance.

(Raw material-containing substance)

The raw material-containing substance contains a lithium atom, a phosphorus atom, a sulfur atom, and a halogen atom. The raw material-containing substance is not particularly limited as long as it contains these atoms, and examples thereof include a raw material-containing substance that contains a substance containing at least one kind of atom selected from these atoms alone as a raw material and a raw material-containing substance that contains two or more such substances. The raw material-containing substance is preferably a raw material-containing substance that contains two or more substances selected from substances that each contain at least one kind of atom selected from a lithium atom, a phosphorus atom, a sulfur atom, and a halogen atom. Thus, the sulfide solid electrolyte produced by the production method of this embodiment contains a lithium atom, a phosphorus atom, a sulfur atom, and a halogen atom.

The substance that can be used as a raw material contains at least one kind of atom of a lithium atom, a phosphorus atom, a sulfur atom, and a halogen atom. More specific examples thereof include alkali metal sulfides, such as lithium sulfide, sodium sulfide, potassium sulfide, rubidium sulfide, and cesium sulfide; alkali metal halides, for example, lithium halides, such as lithium fluoride, lithium chloride, lithium bromide, and lithium iodide, and sodium halides, such as sodium iodide, sodium fluoride, sodium chloride, and sodium bromide; phosphorus sulfide, such as diphosphorus trisulfide ($P_2S_3$) and diphosphorus pentasulfide ($P_2S_5$); phosphorus halide, such as various phosphorus fluoride ($PF_3$, $PF_5$), various phosphorus chloride ($PCl_3$, $PCl_5$, $P_2Cl_4$), various phosphorus bromide ($PBr_3$, $PBr_5$), and various phosphorus iodide ($PI_3$, $P_2I_4$); thiophosphoryl halide, such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and other compounds composed of at least two elements selected from the above four elements; and halogen simple substance, such as fluorine ($F_2$), chlorine ($Cl_2$), bromine ($Br_2$), and iodine ($I_2$), with typical preferred examples thereof including bromine ($Br_2$) and iodine ($I_2$).

An example of the compound that can be used as the raw material other than the above compounds is a compound containing at least one kind of atom selected from the aforementioned four kinds of atoms and containing any atom other than the aforementioned four kinds of atoms. More specific examples include lithium compounds, such as lithium oxide, lithium hydroxide, and lithium carbonate; metal sulfides, such as silicon sulfide, germanium sulfide, boron sulfide, gallium sulfide, tin sulfide ($SnS$, $SnS_2$), aluminum sulfide, and zinc sulfide; phosphoric acid compounds, such as sodium phosphate and lithium phosphate; metal halides, such as an aluminum halide, a silicon halide, a germanium halide, an arsenic halide, a selenium halide, a tin halide, an antimony halide, a tellurium halide, and a bismuth halide; and phosphorus oxyhalides, such as phosphorus oxychloride ($POCl_3$) and phosphorus oxybromide ($POBr_3$).

In this embodiment, the halogen atom cannot be completely defined because it depends on the sulfide solid electrolyte to be produced, but from the viewpoint of more easily obtaining a sulfide solid electrolyte having a high ionic conductivity, among halogen atoms, a chlorine atom, a bromine atom, and an iodine atom are preferred. One kind of the atoms may be used alone or two or more kinds thereof may be used in combination.

For example, when a sulfide solid electrolyte having a thio-LISICON Region II-type crystal structure as described later is to be obtained, a bromine atom and an iodine atom are more preferred, and when a sulfide solid electrolyte having an argyrodite-type crystal structure is to be obtained, a chlorine atom and a bromine atom are more preferred.

In this embodiment, from the viewpoint of more easily obtaining a sulfide solid electrolyte having a high ionic conductivity, as a substance that can be used as a raw material, among the above compounds, alkali metal sulfides, such as lithium sulfide and sodium sulfide, phosphorus sulfides, such as diphosphorus trisulfide ($P_2S_3$) and diphosphorus pentasulfide ($P_2S_5$), halogen simple substances, such as fluorine ($F_2$), chlorine ($Cl_2$), bromine ($Br_2$), and iodine ($I_2$), and lithium halides, such as lithium fluoride, lithium chloride, lithium bromide, and lithium iodide are preferred. Among the alkali metal sulfides, lithium sulfide is preferred, and among phosphorus sulfides, diphosphorus pentasulfide is preferred.

As described above, the raw material containing a halogen atom cannot be completely defined because it depends on the sulfide solid electrolyte to be obtained, but chlorine ($Cl_2$), bromine ($Br_2$) and iodine ($I_2$) are preferred among halogen simple substances, and lithium chloride, lithium bromide, and lithium iodide are preferred among the lithium halides. Furthermore, when a sulfide solid electrolyte having a thio-LISICON Region II-type crystal structure is to be obtained, bromine ($Br_2$) and iodine ($I_2$) are more preferred as a halogen simple substance, and lithium bromide and lithium iodide are more preferred as a lithium halide. When a sulfide solid electrolyte having an argyrodite-type crystal structure is to be obtained, chlorine ($Cl_2$) and bromine ($Br_2$) are more preferred as a halogen simple substance, and lithium chloride and lithium bromide are more preferred as a lithium halide.

Preferred examples of the combination of substances that can be used as a raw material include a combination of lithium sulfide, a phosphorus sulfide, and a lithium halide and a combination of lithium sulfide, a phosphorus sulfide, and a halogen simple substance, and a more preferred example thereof is a combination of lithium sulfide, a phosphorus sulfide, and a lithium halide. Here, the phosphorus sulfide is preferably diphosphorus pentasulfide, and the lithium halide and halogen simple substance can be selected according to the sulfide solid electrolyte to be obtained as described above.

In this embodiment, a preferred example of the compound that can be used as a raw material is a sulfide solid electrolyte containing a $PS_4$ unit and the like, such as $Li_3PS_4$. By using, as a raw material, a structure containing lithium, such as $Li_3PS_4$ which is present in a sulfide solid electrolyte obtained by the production method of this embodiment as a main structure, as compared with a case where a compound, such as the lithium sulfide, is used as a raw material to form a sulfide solid electrolyte through synthesis by a reaction between compounds, it is possible to increase the compositional ratio of the structure, that is, to increase the $PS_4$ fraction, and a high ionic conductivity can be achieved.

In this embodiment, a preferred example of the sulfide solid electrolyte that can be adopted as a compound used as a raw material (hereinafter also referred to as "raw material sulfide solid electrolyte") is an amorphous sulfide solid electrolyte that has a $Li_3PS_4$ structure as a molecular structure (also referred to as "amorphous $Li_3PS_4$") or a crystalline sulfide solid electrolyte that has a $Li_3PS_4$ structure as a molecular structure (also referred to as "crystalline $Li_3PS_4$"). In addition, an amorphous sulfide solid electrolyte having a structure containing a halogen atom, which is described later as the "amorphous sulfide solid electrolyte", a crystalline sulfide solid electrolyte, or a precursor related thereto (such as "calcined product" as described later) can also be used.

In view of achieving a high ionic conductivity, the raw material sulfide solid electrolyte is preferably an amorphous or a crystalline sulfide solid electrolyte not containing a $Li_4P_2S_7$ structure. As such a raw material sulfide solid electrolyte, one produced by a conventional production method, such as a mechanical milling method, a slurry method, or a melt quenching method, can be used, and a commercially available product can also be used. In addition, one produced by a solution method in which raw materials are completely dissolved in synthesis can also be used.

The sulfide solid electrolyte used as a raw material (raw material sulfide solid electrolyte) may be amorphous or crystalline, or may contain an amorphous sulfide solid electrolyte and a crystalline sulfide solid electrolyte. In any case, when a compound containing a halogen atom is used as a raw material, dispersibility of the halogen atoms is enhanced and bonding between the halogen atom and the lithium atom, sulfur atom, and phosphorus atom in the solid electrolyte is liable to be formed, and as a result, a sulfide solid electrolyte having a higher ionic conductivity can be obtained.

In this embodiment, when lithium sulfide is used as a raw material, the lithium sulfide is preferably particulate.

The lithium sulfide particles have an average particle size ($D_{50}$) of 10 $\mu$m or more and 2000 $\mu$m or less, more preferably 30 $\mu$m or more and 1500 $\mu$m or less, and further preferably 50 $\mu$m or more and 1000 $\mu$m or less. In the present description, the average particle size ($D_{50}$) is a particle size to reach 50% of all of the particles in sequential cumulation from particles of the smallest particle size in drawing a particle size distribution cumulative curve, and the volumetric distribution is an average particle size which can be measured, for example, using a laser diffraction/scattering particle size distribution analyzer. Among the compounds listed above as a raw material, solid raw materials preferably have an average particle size similar to that of the lithium sulfide particles, that is, have an average particle size within the same range as the average particle size of the lithium sulfide particles. The particle size of a compound as a raw material may be adjusted, as needed, for example, by pulverization.

When lithium sulfide, diphosphorus pentasulfide, and a lithium halide are used as raw materials, the ratio of lithium sulfide to the sum of lithium sulfide and diphosphorus pentasulfide cannot be completely defined because it depends on the sulfide solid electrolyte to be obtained, but from the viewpoint of achieving a higher chemical stability and the viewpoint of achieving a high ionic conductivity, the ratio is preferably 60% by mole or more, more preferably 65% by mole or more, further preferably 68% by mole or more, and the upper limit is preferably 85% by mole or less, more preferably 83% by mole or less, further preferably 80% by mole or less.

When lithium sulfide, diphosphorus pentasulfide, and a lithium halide, and another raw material which is optionally used are used, the content of lithium sulfide and diphosphorus pentasulfide to the total of the raw materials is preferably 55% by mole or more, more preferably 58% by mole or more, further preferably 60% by mole or more, and the upper limit is preferably 100% by mole or less, more preferably 90% by mole or less, further preferably 80% by mole or less, furthermore preferably 70% by mole or less.

When lithium bromide and lithium iodide are used in combination as the lithium halide, from the viewpoint of achieving a high ionic conductivity, the ratio of lithium bromide to the sum of lithium bromide and lithium iodide is preferably 1% by mole or more, more preferably 20% by mole or more, further preferably 40% by mole or more, furthermore preferably 50% by mole or more, and the upper limit is preferably 99% by mole or less, more preferably 90% by mole or less, further preferably 80% by mole or less, furthermore preferably 70% by mole or less.

When lithium bromide and lithium chloride are used in combination as the lithium halide, the ratio of lithium bromide to the sum of lithium bromide and lithium chloride is the same as the ratio of lithium bromide to the sum of lithium bromide and lithium iodide.

[Organic solvent]

In the production method of this embodiment, the raw material-containing substance is mixed in an organic solvent. As the solvent used in mixing the raw material-containing substance, a wide variety of solvents and the like that are referred to as an organic solvent can be used.

As the solvent, a wide variety of solvents that have been heretofore used in production of a solid electrolyte can be adopted, and examples thereof include hydrocarbon solvents, such as aliphatic hydrocarbon solvents, alicyclic hydrocarbon solvents, and aromatic hydrocarbon solvents.

Examples of the aliphatic hydrocarbons include saturated aliphatic hydrocarbons, such as pentane, hexane, 2-ethylhexane, heptane, octane, decane, undecane, dodecane, and tridecane, and unsaturated aliphatic hydrocarbons corresponding to the saturated aliphatic hydrocarbons, such as pentene and hexene. Examples of the alicyclic hydrocarbons include saturated alicyclic hydrocarbons, such as cyclohexane and methylcyclohexane, and unsaturated aliphatic hydrocarbons corresponding to the saturated alicyclic hydrocarbons, such as cyclohexene and methylcyclohexene.

Examples of the aromatic hydrocarbon solvents include benzene, toluene, xylene, mesitylene, ethylbenzene, tert-butylbenzene, biphenyl, naphthalene, tetrahydronaphthalene (tetralin, cyclohexylbenzene), and anthracene.

Besides the hydrocarbon solvents, solvents containing an atom other than a carbon atom and a hydrogen atom, for example, a heteroatom, such as a nitrogen atom, an oxygen atom, a sulfur atom, or a halogen atom, are also exemplified.

Preferred examples of the solvent containing an oxygen atom as a heteroatom include ether solvents, ester solvents, alcohol solvents, aldehyde solvents, and ketone solvents.

Preferred examples of the ether solvents include aliphatic ethers, such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; alicyclic ethers, such as ethylene oxide, propylene oxide, tetrahydrofuran, tetrahydropyran, dimethoxytetrahydrofuran, cyclopentyl methyl ether, and dioxane; heterocyclic ethers, such as furan, benzofuran, and benzopyran; aromatic ethers, such as methyl phenyl ether (anisole), ethyl phenyl ether, dibenzyl ether, and diphenyl ether (diphenyl oxide).

Preferred examples of the ester solvents include aliphatic esters, such as methyl formate, ethyl formate, methyl acetate, ethyl acetate, propyl acetate, isopropyl acetate; methyl propionate, ethyl propionate, dimethyl oxalate, diethyl oxalate, dimethyl malonate, diethyl malonate, dimethyl succinate, and diethyl succinate; alicyclic esters, such as methyl cyclohexanecarboxylate, ethyl cyclohexanecarboxylate, and dimethyl cyclohexanedicarboxylate; heterocyclic esters, such as methyl pyridinecarboxylate, methyl pyrimidinecarboxylate, acetolactone, propiolactone, butyrolactone, and valerolactone; and aromatic esters, such as methyl benzoate, ethyl benzoate, dimethyl phthalate, diethyl phthalate, butylbenzyl phthalate, dicyclohexyl phthalate, trimethyl trimellitate, and triethyl trimellitate.

In addition, alcohol solvents, such as ethanol and butanol; aldehyde solvents, such as formaldehyde, acetaldehyde, and dimethylformamide; and ketone solvents, such as acetone and methyl ethyl ketone, are preferably exemplified.

Examples of the solvents containing a nitrogen atom as the heteroatom include solvents having a group containing a nitrogen element, such as an amino group, an amide group, a nitro group, and a nitrile group.

Preferred examples of solvents having an amino group (amine solvents) include aliphatic amines, such as diethylamine, triethylamine, ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); alicyclic amines, such as cyclopropanediamine, cyclohexanediamine, and bisaminomethylcyclohexane; heterocyclic amines, such as isophoronediamine, pyridine, methylpyridine, dimethylpyridine, methylethylpyridine, piperazine, dipiperidylpropane, and dimethylpiperazine; aromatic amines, such as phenyldiamine, tolylenediamine, naphthalenediamine, methylphenylenediamine, dimethylnaphthalenediamine, dimethylphenylenediamine, tetramethylphenylenediamine, tetramethylnaphthalenediamine, and dimethylaniline.

Preferred examples of solvents having a nitrile group (nitrile solvents) include acetonitrile, propionitrile, 3-chloropropionitrile, benzonitrile, 4-fluorobenzonitrile, tert-butyronitrile, isobutyronitrile, acrylonitrile, cyclohexylnitrile, capronitrile, isocapronitrile, malononitrile, and fumaronitrile. Other solvents containing a nitrogen atom, such as dimethylformamide and nitrobenzene, are also preferably exemplified.

Preferred examples of solvents containing a halogen atom as the heteroatom include dichloromethane, chlorobenzene, trifluoromethylbenzene, chlorobenzene, chlorotoluene, and bromobenzene.

Preferred examples of solvents containing a sulfur atom include dimethyl sulfoxide and carbon disulfide.

The amount of the organic solvent used is such an amount that the content of the whole amount of the raw material-containing substance relative to the total amount of the whole amount of the raw material-containing substance and the organic solvent is preferably 1% by mass or more, more preferably 3% by mass or more, further preferably 5% by mass or more, furthermore preferably 8% by mass or more, and the upper limit is preferably 20% by mass or less, more preferably 17% by mass or less, further preferably 15% by mass or less, furthermore preferably 12% by mass or less. When the amount of the organic solvent used is within the above range, the raw material-containing substance is liable to be uniformly maintained in the organic solvent, and thus, the raw material-containing substance is liable to be selectively heated by microwave irradiation, making it possible to more efficiently produce a sulfide solid electrolyte.

(Dielectric loss factor and boiling point of organic solvent)

The organic solvent used in the production method of this embodiment is preferably an organic solvent having a dielectric loss factor at 25°C of 10.0 or less among the above organic solvents. It is because the raw material-containing substance can be more selectively heated by using an organic solvent having a dielectric loss factor of 10.0 or less, making it possible to more efficiently produce a sulfide solid electrolyte. From this point of view, the dielectric loss factor of the organic solvent is more preferably 8.0 or less, further preferably 5.0 or less, furthermore preferably 1.0 or less, particularly preferably 0.5 or less, and the lower limit is not particularly limited, and generally 0.01 or more.

The dielectric loss factor in the present description is a dielectric loss factor at 25°C under 2.45 GHz, and is a value measured based on an ordinary method. For example, using a permittivity measurement apparatus (various apparatuses, such as an LCR meter, an impedance material analyzer, a network analyzer, a TDR measurement apparatus, or a pulse THz spectroscopy), the relative permittivity and the dielectric loss tangent is measured, whereby the dielectric loss factor can be calculated.

The organic solvent used in the production method of this embodiment is preferably one having a boiling point of 50°C or higher among the above organic solvents. The reason is as follows. When the boiling point is 50°C or higher, it is possible to suppress the amount of the organic solvent volatilized in selectively heating the raw material-containing substance and to uniformly maintain the raw material-containing substance in the organic solvent so that the raw material-containing substance can be easily selectively heated and the amount of the organic solvent used can be reduced. From this point of view, the boiling point of the organic solvent is more preferably 65°C or higher, further preferably 75°C or higher, furthermore preferably 100°C or higher, and particularly preferably 200°C or higher.

Among the organic solvents mentioned above, aromatic solvents having an aromatic ring, such as an aromatic hydrocarbon solvent, an aromatic ether solvent, and an aromatic ester solvent, and aliphatic hydrocarbons, alicyclic hydrocarbons, ether solvents (excluding the aromatic ether solvents), ester solvents (excluding the aromatic ester solvents), solvent having an amino group (amine solvents), and solvents having a halogen atom are more preferred, and among these solvents, aromatic solvents having an aromatic ring is particularly preferred. These organic solvents are liable to satisfy the requirements of the dielectric loss factor and boiling point, and are liable to selectively heat the raw material-containing substance, making it possible to more efficiently produce a sulfide solid electrolyte.

The aromatic solvent is preferably selected from an aromatic hydrocarbon solvent and an aromatic ether, and is more preferably an aromatic ether. The aromatic hydrocarbon solvent is preferably benzene, toluene, xylene, biphenyl, naphthalene, or tetrahydronaphthalene (tetralin, cyclohexylbenzene), and the aromatic ether is preferably diphenyl ether (diphenyl oxide).

The aliphatic hydrocarbon is preferably pentane or hexane, and the alicyclic hydrocarbon is preferably cyclohexane.

The ether solvent (excluding the aromatic ether solvents) is preferably an aliphatic ether or an alicyclic ether, and among them, diethyl ether and tetrahydrofuran are preferred. The ester solvent (excluding the aromatic ester solvent) is preferably an aliphatic ester, and among them, ethyl acetate is preferred.

The solvent having an amino group (amine solvent) is preferably an aliphatic amine or a heterocyclic amine, and among them, triethylamine and pyridine are preferred.

The solvent containing a halogen atom is preferably dichloromethane.

[First step]

The first step is a step of mixing the raw material-containing substance in the organic solvent to prepare a mixture. The thus-obtained mixture is a slurry (suspension) in which the raw material-containing substance is dispersed in the organic solvent. By preparing a mixture by mixing, the raw material-containing substance can be more uniformly maintained in the organic solvent, and thus, the raw material-containing substance is liable to be selectively heated, making it possible to efficiently produce a sulfide solid electrolyte.

The first step can be performed by using, for example, a mixer. The first step can also be performed by using a stirrer, a pulverizer, or the like. It is because a stirrer can cause mixing of the raw materials, and a pulverizer causes pulverization of the raw materials while causing mixing at the same time. In other words, the mixture is obtained by subjecting the raw material-containing substance to a treatment of stirring, mixing, pulverization, or any combination thereof in the organic solvent.

In the production method of this embodiment, mixing can be performed by using any one of a stirrer, a mixer, and a pulverizer, but from the viewpoint of efficiently preparing a slurry (suspension) in which the raw material-containing substance is dispersed in the organic solvent, it is preferred to use any one of a stirrer and a mixer, and it is more preferred to use a mixer.

An example of the stirrer and mixer is a mechanically stirring-style mixer in which a stirring blade is provided in a reaction tank for stirring (mixing by stirring, which can be also referred to as stirring-mixing). Examples of the mechanically stirring-style mixer include a high-speed stirring-type mixer and a double arm-type mixer. Examples of the high-speed stirring-type mixer include a vertical axis rotation-type mixer and a horizontal axis rotation-type mixer, and a mixer of either type may be used.

Examples of the shape of the stirring blade used in the mechanically stirring-style mixer include a blade shape, an arm shape, an anchor shape, a paddle shape, a full-zone shape, a ribbon shape, a multistep blade shape, a double arm shape, a shovel shape, a twin-shaft blade shape, a flat blade shape, and a C-type blade shape. From the viewpoint of more efficiently promoting the reaction of the raw materials, a shovel shape, a flat blade shape, a C-type blade shape, an anchor shape, a paddle shape, and a full-zone shape are preferred, and an anchor shape, a paddle shape, and a full-zone shape are more preferred.

When a mechanically stirring-style mixer is used, the rotation number of the stirring blade can be appropriately adjusted according to the volume and temperature of the fluid in the reaction tank, the shape of the stirring blade, and the like and is not particularly limited, but, generally can be 5 rpm or more and 400 rpm or less, and from the viewpoint of more efficiently promoting the reaction of the raw materials, is preferably 10 rpm or more and 300 rpm or less, more preferably 15 rpm or more and 250 rpm or less, and further preferably 20 rpm or more and 200 rpm or less.

The temperature condition in mixing with a mixer is not particularly limited, and, for example, is generally -30 to 120°C, preferably -10 to 100°C, more preferably 0 to 80°C, and further preferably 10 to 60°C. The mixing time is generally 0.1 to 500 hours, and from the viewpoint of making the dispersion state of the raw materials uniform to promote the reaction, is preferably 1 to 450 hours, more preferably 10 to 425 hours, further preferably 20 to 400 hours, and furthermore preferably 40 to 375 hours.

As the pulverizer, for example, a medium-style pulverizer using a pulverization medium can be used.

Medium-style pulverizers are roughly divided into vessel driving-style pulverizers and media stirring-style pulverizers. Examples of the vessel driving-style pulverizers include a ball mill and a bead mill which include a stirring tank, a pulverizing tank, or a combination thereof. Examples of the media stirring-style pulverizers include various pulverizers, for example, impact-style pulverizers, such as a cutter mill, a hummer mill, and a pin mill; a tower-type pulverizer, such as a tower mill; stirring tank-type pulverizers, such as an attritor, an aquamizer, and a sand grinder; flow tank-type pulverizers, such as a viscomill and a pearl mill; a flow tube-type pulverizer; an annular-type pulverizer, such as a coball mill; a continuous dynamic-type pulverizer; and a single screw or multi-screw kneader. Among them, in view of easy adjustment of the particle size of the resulting sulfide, a ball mill and a bead mill exemplified as a vessel driving-style pulverizer are preferred, and above all, those of a planetary type are preferred.

The pulverizer can be appropriately selected according to the desired scale and the like. In the case of a relatively small scale, a vessel driving-style pulverizer, such as a ball mill or a bead mill, can be used, and in the case of a large scall or mass production, a pulverizer of another style may be used.

As described later, in the case of a liquid state or a slurry state containing a liquid such as a solvent in mixing, a wet pulverizer which can be adapted to wet pulverization is preferably used.

Typical examples of the wet pulverizer include a wet bead mill, a wet ball mill, and a wet vibration mill, and in points of capability of freely adjusting conditions of pulverization operation and being easily adapted to a smaller particle size, a wet bead mill which uses beads as pulverization media is preferred. A dry pulverizer, for example, a dry media-style pulverizer, such as a dry bead mill, a dry ball mill, or a dry vibration mill, or a dry non-media pulverizer, such as a jet mill, can also be used.

When the object to be mixed is in a liquid state or a slurry state, a flow-style pulverizer in which a circulation operation can be adopted as needed can also be used. A specific example thereof is a pulverizer having a form in which the object is circulated between a pulverizer (pulverization mixer) that pulverizes a slurry and a temperature keeping tank (reaction vessel).

The size of beads or balls used in the ball mill or bead mill can be appropriately selected according to the desired particle size and the amount of the object treated, and, for example, the diameter of the beads is generally 0.05 mmφ or more, preferably 0.1 mmφ or more, more preferably 0.3 mmφ or more, and the upper limit is generally 5.0 mmφ or less, preferably 3.0 mmφ or less, more preferably 2.0 mmφ or less. The diameter of the balls is generally 2.0 mmφ or more, preferably 2.5 mmφ or more, more preferably 3.0 mmφ or more, and the upper limit is generally 20.0 mmφ or less, preferably 15.0 mmφ or less, more preferably 10.0 mmφ or less.

Examples of the material thereof include metals, such as stainless steel, chromium steel, and tungsten carbide; a ceramic, such as zirconia and silicon nitride; and a mineral, such as agate.

When a ball mill or a bead mill is used, the rotation number cannot be completely defined because it depends on the scale of the treatment, but is generally 10 rpm or more, preferably 20 rpm or more, more preferably 50 rpm or more, and the upper limit is generally 1,000 rpm or less, preferably 900 rpm or less, more preferably 800 rpm or less, further preferably 700 rpm or less.

The time for pulverization in this case cannot be completely defined because it depends on the scale of the treatment, but is generally 0.5 hours or more, preferably 1 hours or more, more preferably 5 hours or more, further preferably 10 hours or more, and the upper limit is generally 100 hours or less, preferably 72 hours or less, more preferably 48 hours or less, further preferably 36 hours or less.

By selecting the size and material of the media (beads, balls) used, the rotation number of a rotor, the time, and the like, a treatment of mixing, stirring, pulverization, or any combination thereof can be performed, and the particle size and the like of the resulting sulfide can be adjusted.

The content of the raw material-containing substance contained in the mixture obtained by mixing is preferably 1% by mass or more, more preferably 3% by mass or more, further preferably 5% by mass or more, furthermore preferably 8% by mass or more, and the upper limit is preferably 20% by mass or less, more preferably 17% by mass or less, further preferably 15% by mass or less, furthermore preferably 12% by mass or less. When the content of the raw material-containing substance is within the above range, the raw material-containing substance is liable to be uniformly maintained in the organic solvent, and thus, the raw material-containing substance is liable to be selectively heated by microwave irradiation, making it possible to more efficiently produce a sulfide solid electrolyte.

[Second step]

In the second step, the mixture obtained in the first step is irradiated with a microwave of 0.5 to 700 W/g to heat the mixture to 50 to 360°C. By irradiating the mixture containing the raw material-containing substance and the organic solvent with a microwave, the raw material-containing substance is selectively heated and a reaction between solid electrolyte raw materials is promoted.

As a microwave generator for emitting the microwave, for example, an irradiation apparatus provided with a high frequency oscillator that oscillates a microwave can be used, and in a small scale, a commercially available microwave oven and the like can also be used.

The frequency of the microwave is not particularly limited as long as it is within about 0.3 GHz or more and 3000 GHz or less, and in view of more efficiently heating the raw material-containing substance and availability of the microwave generator, the frequency is preferably 0.5 GHz or more, more preferably 1.0 GHz or more, further preferably 1.5 GHz or more, and the upper limit is preferably 100 GHz or less, more preferably 10.0 GHz or less, further preferably 6.0 GHz or less.

The output cannot be completely defined because it depends on the kind of the organic solvent contained in the mixture to be irradiated with the microwave, the amount of the mixture, and the like, but from the viewpoint of more efficiently heating the raw material-containing substance, the output is to be 0.5 to 700 W/g, preferably 60 W/g or more, more preferably 100 W/g or more, further preferably 130 W/g or more, and the upper limit is to be 700 W/g or less, more preferably 300 W/g or less, further preferably 280 W/g or less.

The irradiation time with the microwave in the second step can be any time during which the temperature of the mixture can be increased to 50 to 360°C, and cannot be completely defined because it depends on the kind of the organic solvent contained in the mixture to be irradiated with the microwave, the amount of the mixture, and the like, but the irradiation time is preferably 1 minute or more, more preferably 2 minutes or more, further preferably 3 minutes or more, and the upper limit is preferably 360 minutes or less, more preferably 300 minutes or less, further preferably 240 minutes or less.

The heating temperature by the microwave irradiation cannot be completely defined because it depends on the composition of the sulfide solid electrolyte to be obtained and whether an amorphous or a crystalline sulfide solid electrolyte is to be obtained, but the temperature of the mixture is 50 to 360°C, preferably 150°C or higher, more preferably 200°C or higher, further preferably 230°C or higher, and the upper limit is preferably 350°C or lower, more preferably 310°C or lower, further preferably 275°C or lower.

The heating temperature by the microwave irradiation can vary depending on the composition of the sulfide solid electrolyte to be obtained and whether amorphous or crystalline , as described above. In other words, whether an amorphous sulfide solid electrolyte or a crystalline sulfide solid electrolyte is produced can be controlled by the heating temperature by the microwave irradiation.

For example, the temperature needed for crystallization of the resulting raw material sulfide solid electrolyte, that is, the peak top temperature of the exothermal peak observed at the lowest temperature side in differential thermal analysis (DTA) under a temperature rising condition of 10°C/minutes with a differential thermal analysis apparatus (DTA apparatus) of the amorphous sulfide solid electrolyte, is taken as a crystallization temperature. When heating is applied so that the temperature of the raw material-containing substance in the mixture obtained by the mixing to be subjected to heating by the microwave irradiation is a temperature higher than the crystallization temperature, a crystalline sulfide solid electrolyte is obtained, and when heating is applied so that the temperature as above is a temperature lower than the crystallization temperature, an amorphous sulfide solid electrolyte is obtained.

When a crystalline sulfide solid electrolyte is to be produced, from the viewpoint of obtaining a crystalline sulfide solid electrolyte more stably and efficiently, the temperature of the raw material-containing substance can be in the range of the crystallization temperature plus preferably 5°C or higher, more preferably 10°C or higher, further preferably 20°C higher, and the upper limit is not particularly limited, but is approximately the crystallization temperature plus 40°C or lower

On the other hand, when an amorphous sulfide solid electrolyte is to be produced, from the viewpoint of obtaining an amorphous sulfide solid electrolyte more stably and efficiently, the temperature of the raw material-containing substance can be in the range of the crystallization temperature minus preferably 5°C or lower, more preferably 10°C or lower, further preferably 20°C or lower, and the boiling point of the organic solvent contained in the mixture or higher, and the lower limit is not particularly limited as long as it is the boiling point of the organic solvent contained in the mixture or higher, but can be, for example, approximately the peak top temperature of the exothermal peak observed at the lowest temperature side minus 40°C or higher.

In the production method of this embodiment, since the raw material-containing substance is selectively heated as described above, the temperature of the raw material-containing substance itself is considered to be higher than the temperature of the organic solvent (which is considered to be the same as the temperature of the mixture). Thus, in the production method of this embodiment, the temperature of the mixture obtained by the mixing can be grasped, but the temperature of the raw material-containing substance in the mixture will be grasped indirectly from the temperature of the mixture.

According to Examples as described later, when the temperature of the mixture is 250°C, a sulfide solid electrolyte having an argyrodite-type crystal structure is obtained. Taking into consideration the fact that, according to a conventional method, calcination at a high temperature of about 400°C is needed for obtaining a sulfide solid electrolyte having an argyrodite-type crystal structure as described above, it can be considered that the temperature of the raw material-containing substance itself is about the temperature of the mixture plus 150°C. Strictly speaking, although the temperature of the raw material-containing substance itself may vary depending on the kind of the organic solvent in the mixture, the content thereof, and the like, the heating temperature is desirably set, based on the temperature of the mixture plus 150°C, while determining whether the temperature reaches the crystallization temperature.

[Temperature keeping step]

The production method of this embodiment may include, after the second step, a temperature keeping step, which is followed by the third step.

In the temperature keeping step, the mixture is irradiated with a microwave to keep the temperature at 80 to 360°C for 1 to 300 minutes, but how the temperature and the like are to be more specifically set is the same as in the second step. In the temperature keeping step, the temperature of the mixture may be varied within the range of 80 to 360°C, but is preferably kept within the range of ±20°C of the temperature targeted in the second step, and more preferably kept within the range of ±10°C thereof.

The irradiation time with the microwave in the temperature keeping step is 1 minute or more, preferably 2 minutes or more, more preferably 3 minutes or more, and the upper limit is 300 minutes or less, preferably 240 minutes or less, more preferably 210 minutes or less, further preferably 190 minutes or less, furthermore preferably 180 minutes or less.

The output of the microwave in irradiation in the temperature keeping step is preferably about 0 to 133 W/g, more preferably about 0 to 100 W/g, and the irradiation may be applied intermittently.

[Third step]

In the third step, the mixture is cooled to 20 to 70°C. By once cooling the mixture and then irradiating the mixture with a microwave of a prescribed high output again in the second step, a reaction between solid electrolyte raw materials can be promoted while suppressing a problem of the granulation due to excessive heating, for example.

The mixture may be cooled by storing the mixture at a normal temperature, or may be positively cooled by bringing a container that stores the mixture in contact with a thermal medium, such as water Alternatively, the mixture may be cooled by directly spraying air onto a reaction vessel.

[Repetition of second and third steps]

In the production method of this embodiment, the second step, the temperature keeping step provided as needed, and the third step are to be repeated 2 to 50 times, and the steps are preferably repeated 2 to 20 times, and the steps are more preferably repeated 3 to 10 times. The number of repetitions of the second and third steps includes the first time.

By repeating the steps, a reaction between solid electrolyte raw materials can be promoted in the second step to increase the quality of the resulting sulfide solid electrolyte, and granulation caused by heating can be suppressed by the third step.

The temperature conditions, the times, and the like in the second step, the temperature keeping step provided as needed, and the third step in the repetitions may be the same as or different from each other, but in view of the easiness of the operation, are preferably the same.

[Drying]

The production method of this embodiment may include drying a fluid obtained by the repetition of the second step, the temperature keeping step provided as needed, and the fourth step. The resulting fluid contains a sulfide solid electrolyte produced through microwave irradiation, a residual organic solvent, and the like, and is generally in a form of slurry (suspension). Accordingly, drying the fluid provides a powder of the sulfide solid electrolyte.

Drying can be performed on the fluid obtained by irradiating the mixture with a microwave at a temperature according to the kind of the solvent.

Further, drying can be performed by volatilizing the solvent through drying under reduced pressure (drying in vacuum) with a vacuum pump or the like generally at 5 to 200°C, preferably 10 to 180°C, more preferably 15 to 160°C.

Drying may be performed on the fluid by filtration using a glass filter, solid-liquid separation by decantation, or solid-liquid separation with a centrifuge or the like.

Drying may be performed by any of the drying under reduced pressure (drying in vacuum), filtration, and solid-liquid separation, and, for example, filtration and soil-liquid separation may be performed, followed by drying under reduced pressure (drying in vacuum).

[Production of raw material contained in raw material-containing substance]

As a raw material contained in the raw material-containing substance, a sulfide solid electrolyte, such as a sulfide solid electrolyte having a $Li_3PS_4$ structure as a molecular structure (lithium thiophosphate), can be preferably used as described above. Hereinafter, a production method of the sulfide solid electrolyte (raw material sulfide solid electrolyte) to be used in the raw material-containing substance will be described mainly for a sulfide solid electrolyte having a $Li_3PS_4$ structure as a molecular structure (lithium thiophosphate).

The raw material sulfide solid electrolyte can be produced by a conventional production method, such as a mechanical milling method, a slurry method, a melt quenching method as described above, and preferably, can be produced by a production method including

mixing and pulverizing a raw material-containing substance containing at least two compounds in a solvent to prepare a raw material mixture, and calcinating the raw material mixture to produce a calcined product.

(Raw material-containing substance)

As a raw material-containing substance containing at least two compounds (for distinguishing it from the raw material-containing substance used in the first step, hereinafter, the raw material-containing substance used in the first step is referred to as "raw material-containing substance A" and the raw material-containing substance used in the "production of raw material contained in raw material-containing substance" is referred to as "raw material-containing substance B"), a raw material-containing substance B that contains lithium sulfide and a phosphorus sulfide which are compounds as raw materials is preferably used, and the phosphorus sulfide is preferably diphosphorus pentasulfide. The amounts of the lithium sulfide and phosphorus sulfide used can be appropriately determined according to the sulfide solid electrolyte to be obtained, and when a sulfide solid electrolyte having an $Li_3PS_4$ structure is to be obtained by using lithium sulfide and diphosphorus pentasulfide, the lithium sulfide and diphosphorus pentasulfide are used in a molar ratio of 3:1.

When another sulfide solid electrolyte is to be obtained, the lithium sulfide and phosphorus sulfide can be used in a molar ratio according to the sulfide solid electrolyte, and when a sulfide solid electrolyte containing a halogen atom is to be obtained, a compound as a raw material containing a halogen atom corresponding thereto can be used. The molar ratio according to the sulfide solid electrolyte, the compounds as raw materials to be used, and the like are the same as described above for the raw material-containing substance A.

The compound contained in the raw material-containing substance B is desirably pulverized in advance before use. The pulverization can be performed using such a pulverizer that is described above as a pulverizer that can be used in preparation of the mixture, and, for example, a pin mill, above all, a pin mill having a metering feeder is preferably used.

(Mixing and pulverization)

The method for producing a raw material sulfide solid electrolyte includes mixing and pulverizing a raw material-containing substance B containing at least two compounds in a solvent to prepare a raw material mixture. For example, phosphorus sulfide and diphosphorus pentasulfide which can be contained in the raw material-containing substance B and which are pulverized in advance as needed are weighed into amounts corresponding to a desired raw material sulfide solid electrolyte, and are roughly mixed to prepare the raw material-containing substance B, which is mixed and pulverized in a solvent, whereby a raw material mixture is obtained.

The raw material mixture contains compounds which are raw materials contained in the raw material-containing substance B, and the compounds are considered to mainly form fine crystal particles. It is because, by mixing and pulverizing the compounds which are raw materials, micronization of the particles of the compounds contained in the raw material-containing substance B proceeds. A part of the compounds which are raw materials is considered to react to form a raw a material sulfide solid electrolyte.

The raw material-containing substance B can be mixed and pulverized with a pulverizer that is described above as a pulverizer that can be used in preparing the mixture, and a medium-style pulverizer, such as a ball mill or a bead mill, is preferred. In addition, a kneader, such as a single screw or multi-screw kneader, can also be used.

As the solvent used in the mixing and pulverization, an organic solvent is preferably used. As the organic solvent, a solvent is appropriately selected and used from the organic solvents that are used in preparing the mixture.

Among the organic solvents, hydrocarbon solvents, such as aliphatic hydrocarbon solvents, alicyclic hydrocarbon solvents, and aromatic hydrocarbon solvents, are preferred, aromatic hydrocarbon solvents are more preferred, and toluene and xylene are particularly preferred.

Also, as the solvent to be used in the mixing and pulverization, such a solvent containing a heteroatom as described above is preferably used, and a combination with the hydrocarbon solvent is more preferably used.

Among the solvents containing a heteroatom, a solvent containing an oxygen atom and a solvent containing a nitrogen atom are preferred, and the solvent containing an oxygen atom is preferably an ether solvent, and the solvent containing a nitrogen atom is preferably a solvent containing a nitrile group (nitrile solvent) and more preferably a solvent containing a nitrile group (nitrile solvent). Among the ether solvents, tetrahydrofuran, diethyl ether, and the like are preferred, and among the nitrile solvents, propionitrile, isocapronitrile, and isobutyronitrile are preferred.

As the solvent used in the mixing and pulverization, a combination of the hydrocarbon solvent and the solvent containing a heteroatom is preferably used. In this case, the content of the solvent containing a heteroatom based on the total amount of the solvents is preferably 0.01% by mass or more, more preferably 0.1% by mass or more, further preferably 0.3% by mass or more, and the upper limit is preferably 5% by mass or less, more preferably 3% by mass or less, further preferably 1% by mass or less.

The raw material-containing substance B and the solvent to be mixed and pulverized generally form a slurry (suspension). The content of the raw material-containing substance B in the slurry to be mixed and pulverized can be appropriately selected within the range of the content of the raw material-containing substance A in the mixture in preparing the mixture.

(Calcination)

The method for producing a raw material sulfide solid electrolyte includes calcinating the raw material mixture obtained by mixing and pulverizing the raw material-containing substance B to produce a calcined product. By calcination, a reaction of the compounds which are raw materials contained in the raw material mixture is promoted to produce a raw material sulfide solid electrolyte and the solvent is removed, and thus, a raw material sulfide solid electrolyte of a powder form is obtained. That is, the calcined product obtained by calcination is a raw material sulfide solid electrolyte.

The method of calcination is not particularly limited, and examples thereof include methods using a hot plate, an autoclave, a vacuum heater, an argon gas atmosphere furnace, or a calcination furnace. A method using a shearing-style dryer, such as an FM mixer or a Nauta Mixer, a static-style furnace, such as a hearth kiln, or a rotation-style furnace, such as a rotary kiln, is also used, and in industrial use, a horizontal-type dryer having a heating mean and a feed mechanism, a horizontal-type vibration fluid dryer, and the like can also be used. The method of calcination can be selected according to the amount treated in the calcination.

The heating temperature and the time in the calcination is not completely defined because it depends on the composition of the calcined product and whether an amorphous calcined product or a crystalline calcined product is to be obtained, but, for example, the heating temperature is preferably 150°C or higher, more preferably 160°C or higher, further preferably 170°C or higher, and the upper limit is preferably 300°C or lower, more preferably 280°C or lower, further preferably 250°C or lower.

Although the raw material sulfide solid electrolyte may be either amorphous or crystalline as described above, from the viewpoint of enhancing the dispersibility of halogen atoms to easily cause bonding of the halogen atoms with lithium atoms, sulfur atoms, and phosphorus atoms in the sulfide solid electrolyte to obtain a sulfide solid electrolyte having a higher ionic conductivity, the raw material sulfide solid electrolyte is preferably amorphous.

Accordingly, the heating temperature in the calcination is preferably a temperature at which an amorphous raw material sulfide solid electrolyte is obtained, and the temperature can be determined by the method based on the crystallization temperature as described above for the heating temperature by the microwave irradiation.

The heating time is preferably 0.1 hour or more, more preferably 0.2 hours or more, further preferably 0.25 hours or more, and the upper limit is preferably 8 hours or less, more preferably 6 hours or less, further preferably 4 hours or less.

The calcination is preferably performed in an inert gas atmosphere (for example, in nitrogen atmosphere or argon atmosphere), or in an atmosphere at a reduced pressure (in particular, in vacuum). The calcination may be also performed in an inert gas atmosphere containing hydrogen gas. This is because deterioration (for example, oxidation) of the raw material sulfide solid electrolyte can be prevented.

Before the calcination, drying may be performed. Drying can previously remove a solvent contained in the raw material mixture. The method of drying can be the same as for drying of the fluid obtained through the microwave irradiation.

As the raw material sulfide solid electrolyte obtained by the production method described above, a sulfide solid electrolyte having an $Li_3PS_4$ structure as a molecular structure (lithium thiophosphate) is mainly assumed, and needless to say, in the case of using the blending ratio of the raw materials used in the raw material-containing substance B (molar ratio), and for example, using a compound containing a halogen atom which is a raw material, a sulfide solid electrolyte that corresponds thereto, is obtained.

In the case of a sulfide solid electrolyte having an $Li_3PS_4$ structure as a molecular structure (lithium thiophosphate), an amorphous sulfide solid electrolyte is obtained by calcination at the preferred heating temperature described above.

For example, when a blending ratio that gives a sulfide solid electrolyte having an argyrodite-type crystal structure as described later is adopted as the blending ratio of the raw materials, the calcined product is merely an intermediate. Although the details are unclear because the state may be varied depending on the conditions of the microwave irradiation and the like, it is considered that the calcined product is a precursor that produces a sulfide solid electrolyte having an argyrodite-type crystal structure through microwave irradiation.

[Sulfide solid electrolyte]

The sulfide solid electrolyte obtained by the production method of this embodiment is either an amorphous sulfide solid electrolyte (glass component) or a crystalline sulfide solid electrolyte. Whether an amorphous or crystalline one is produced can be controlled by the heating temperature by the microwave irradiation.

(Amorphous sulfide solid electrolyte)

Preferred examples of the amorphous sulfide solid electrolyte obtained by the production method of this embodiment include a sulfide solid electrolyte that contains a lithium atom, a sulfur atom, a phosphorus atom, and a halogen atom, and that is typically composed of, for example, lithium sulfide, a phosphorus sulfide, and a lithium halide, such as $Li_2S$-$P_2S_5$-LiI, $Li_2S$-$P_2S_5$-LiCl, $Li_2S$-$P_2S_5$-LiBr, or $Li_2S$-$P_2S_5$-LiI-LiBr; and a sulfide solid electrolyte that contains another atom, such as an oxygen atom or a silicon atom, such as $Li_2S$-$P_2S_5$-$Li_2O$-LiI or $Li_2S$-$SiS_2$-$P_2S_5$-LiI. From the viewpoint of achieving a higher ionic conductivity, a solid electrolyte composed of a lithium sulfide, a phosphorus sulfide, and a lithium halide, such as $Li_2S$-$P_2S_5$-LiI, $Li_2S$-$P_2S_5$-LiCl, $Li_2S$-$P_2S_5$-LiBr, or $Li_2S$-$P_2S_5$-LiI-LiBr is preferably exemplified.

The kinds of elements constituting the amorphous sulfide solid electrolyte can be found, for example, by an ICP emission spectrometer.

The shape of the amorphous sulfide solid electrolyte is not particularly limited, and an example is particulate. The average particle size ($D_{50}$) of the particulate amorphous sulfide solid electrolyte can be, for example, in the range of 0.01 μm to 500 μm or 0.1 to 200 μm.

(Crystalline sulfide solid electrolyte)

The crystalline sulfide solid electrolyte obtained by the production method of this embodiment may be a so-called glass ceramic which is obtained by heating an amorphous solid electrolyte to the crystallization temperature or higher, and examples of the the crystal structure thereof include an $Li_3PS_4$ crystal structure, an $Li_4P_2S_6$ crystal structure, an $Li_7PS_6$ crystal structure, an $Li_7P_3S_{11}$ crystal structure, and a crystal structure having peaks at around $2\theta=20.2°$ and at around $2\theta=23.6°$ (for example, JP 2013-16423 A). Preferred examples of the crystalline sulfide solid electrolyte obtained by the production method of this embodiment include, from the viewpoint of achieving a higher ionic conductivity, the following argyrodite-type crystal structure and thio-LISICON Region II-type crystal structure.

The crystal structures having the $Li_7PS_6$ structural backbone in which P is partially substituted with Si represented by compositional formulae $Li_{7-x}P_{1-y}Si_yS_6$ and $Li_{7+x}P_{1-y}Si_yS_6$ (x is -0.6 to 0.6, y is 0.1 to 0.6) are a cubic crystal or an orthorhombic crystal, and preferably a cubic crystal, and have peaks mainly appearing at positions of $2\theta = 15.5°$, $18.0°$, $25.0°$, $30.0°$, $31.4°$, $45.3°$, $47.0°$, and $52.0°$ in the X-ray diffraction measurement using a CuKα line. The crystal structure represented by the compositional formula $Li_{7-x-2y}PS_{6-x-y}Cl_x$ ($0.8 \leq x \leq 1.7$, $0 < y \leq -0.25x+0.5$) is preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in the X-ray diffraction measurement using a CuKα line. The crystal structure represented by the compositional formula $Li_{7-x}PS_{6-x}Ha_x$ (Ha is Cl or Br, x is preferably 0.2 to 1.8) is preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in the X-ray diffraction measurement using a CuKα line. Such a crystal structure basically having a $Li_7PS_6$ structural backbone is also referred to as an argyrodite-type crystal structure.

The positions of the peaks may vary within the range of $\pm0.5°$.

Examples of the crystal structure also include an $Li_{4-x}Ge_{1-x}P_xS_4$-based thio-LISICON Region II-type crystal structure (see Kanno, et al., Journal of The Electrochemical Society, 148 (7) A742-746 (2001)) and a crystal structure similar to the $Li_{4-x}Ge_{1-x}P_xS_4$-based thio-LISICON Region II-type crystal structure (see Solid State Ionics, 177 (2006), 2721-2725).

In the present description, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type crystal structure. In addition, a crystalline sulfide solid electrolyte obtained by the production method of this embodiment may have the thio-LISICON Region II-type crystal structure or may have the thio-LISICON Region II-type crystal structure as a main crystal, and from the viewpoint of achieving a higher ionic conductivity, the crystalline sulfide solid electrolyte preferably has the thio-LISICON Region II-type crystal structure as a main crystal. In the present description, the phrase "having as a main crystal" means that the percentage of the subject crystal structure in the crystal structure is 80% or more, preferably 90% or more, and more preferably 95% or more. From the viewpoint of achieving a higher ionic conductivity, the crystalline sulfide solid electrolyte obtained by the production method of this embodiment preferably contains no crystalline $Li_3PS_4$($\beta$-$Li_3PS_4$).

In the X-ray diffraction measurement using a CuKα line, the $Li_3PS_4$ crystal structure gives diffraction peaks, for example, at around $2\theta = 17.5°$, $18.3°$, $26.1°$, $27.3°$, and $30.0°$; the $Li_4P_2S_6$ crystal structure gives diffraction peaks, for example, at around $2\theta = 16.9°$, $27.1°$, and $32.5°$; the $Li_7PS_6$ crystal structure gives diffraction peaks, for example, at around $2\theta = 15.3°$, $25.2°$, $29.6°$, and $31.0°$; the $Li_7P_3S_{11}$ crystal structure gives diffraction peaks, for example, at around $2\theta = 17.8°$, $18.5°$, $19.7°$, $21.8°$, $23.7°$, $25.9°$, $29.6°$, and $30.0°$; the $Li_{4-x}Ge_{1-x}P_xS_4$-based thio-LISICON Region II-type crystal structure gives diffraction peaks, for example, at around $2\theta = 20.1°$, $23.9°$, and $29.5°$; and the crystal structure similar to the $Li_{4-x}Ge_{1-x}P_xS_4$-based thio-LISICON Region II-type crystal structure gives diffraction peaks, for example, at around $2\theta = 20.2$ and $23.6°$. The position of these peaks may vary within a range of $\pm0.5°$.

As described above, when a thio-LISICON Region II-type crystal structure is obtained in this embodiment, crystalline $Li_3PS_4$ ($\beta$-$Li_3PS_4$) is preferably not contained. The sulfide solid electrolyte obtained by the production method of this embodiment has no diffraction peaks at $2\theta = 17.5°$ and $26.1°$ which are given by crystalline $Li_3PS_4$, or, if has them, only peaks that are quite smaller than the diffraction peaks of a thio-LISICON Region II-type crystal structure are detected.

The shape of the crystalline sulfide solid electrolyte is not particularly limited, and an example thereof is particulate. The average particle diameter ($D_{50}$) of the particulate crystalline sulfide solid electrolyte can be, for example, within the range of 0.01 μm to 500 μm or 0.1 to 200 μm.

(Application of sulfide solid electrolyte)

The sulfide solid electrolyte obtained by the production method of this embodiment has a high ionic conductivity and a superior battery performance, and thus, is suitably used in a battery. The sulfide solid electrolyte obtained by the production method of this embodiment may be used any of a positive electrode layer, a negative electrode layer, and an electrolyte layer. Each layer can be produced by a known method.

In the battery, besides a positive electrode layer, an electrolyte layer, and a negative electrode layer, a collector is preferably used, and as the collector, a known collector can be used. For, example, a layer in which a substance that reacts with the solid electrolyte, such as Au, Pt, Al, Ti, or Cu, is coated with Au or the like can be used.

Examples

Next, the present invention will be specifically described with reference to examples, but the present invention is in no way limited by the examples.

(Preparation Example 1: preparation of raw material sulfide solid electrolyte)

Lithium sulfide ($Li_2S$) was pulverized under nitrogen atmosphere using a pin mill ("100UPZ (model number)", manufactured by HOSOKAWA MICRON CORPORATION) with a metering feeder (feeding rate: 80 g/min, rotation speed of disk: 18000 rpm).

Diphosphorus pentasulfide ($P_2S_5$, manufactured by Italmatch Chemicals), lithium bromide (LiBr, manufactured by Honjo Chemical Corporation), and lithium chloride (LiCl, manufactured by Honjo Chemical Corporation) were also pulverized using the pin mill. Here, the feeding rate of diphosphorus pentasulfide ($P_2S_5$) was 140 g/min, the feeding rate of lithium bromide (LiBr) was 230 g/min, and the feeding rate of lithium chloride (LiCl) was 250 g/min, and the rotation speed of the disk was 18000 rpm for each.

Subsequently, in a glove box under nitrogen atmosphere, the above-pulverized compounds were metered so as to give a molar ratio, $Li_2S : P_2S_5 : LiBr : LiCl$, of 47.5 : 12.5 : 15.0 : 25.0 and a total mass of 110 g, and were put in a glass container, which was shaken to roughly mix the compounds.

In a mixed solvent of 720 mL of dehydrated toluene (manufactured by Wako Pure Chemical Corporation) and 2.9 mL (2 % by weight relative to the raw materials) of dehydrated isobutyronitrile (manufactured by KISHIDA CHEMICAL Co., Ltd.), 110 g of the roughly mixed raw materials were dispersed under nitrogen atmosphere to prepare a slurry of about 10% by mass. While keeping the nitrogen atmosphere, the slurry was mixed and pulverized using a bead mill (LMZ015, manufactured by Ashizawa Finetech Ltd.). Specifically, as a pulverization medium, 456 g of zirconia beads having a diameter of 0.5 mm were used, and while operating the beads mill under conditions of a peripheral speed of 12 m/s and a flow rate of 500 mL/min, the slurry was put in the mill and was subjected to a circulation operation for 1 hour to prepare a mixture of the raw materials.

Into an autoclave (volume: 500 mL, made of SUS316) equipped with a stirrer and a heating oil bath, 400 mL of the mixture of the raw materials obtained above was put, and was subjected to a heat treatment at 200°C for 2 hours while stirring at a rotation speed of 350 rpm. After the treatment, the solvent was removed by drying under reduced pressure to obtain a calcined product.

(Example 1)

The raw material sulfide solid electrolyte obtained in Preparation Example 1 was used as a raw material-containing substance.

In 13.5 g of a solvent containing biphenyl and diphenyl oxide ("DAWTHERM A heat medium (tradename)", manufactured by Dow Chemical Japan Ltd., content of biphenyl: 27% by mass) which were organic solvents, 1.5 g of the raw material sulfide solid electrolyte obtained in Preparation Example 1 was mixed to prepare a mixture (slurry concentration: 10% by mass).

The obtained mixture was placed in a microwave irradiation apparatus ("Initiator+ (model number)", manufactured by Biotage Japan Ltd.), and microwave irradiation (output: 300 W, frequency: 2.45 GHz) was started to allow the temperature of the mixture to reach 250°C (second step).

Next, the temperature of the mixture was kept at 250°C for 30 minutes by appropriately changing the output of the microwave between 0 to 200 W (the apparatus automatically varies the output (W) for keeping the temperature) (temperature keeping step).

Subsequently, the microwave irradiation was stopped and the obtained mixture was cooled to 50°C by air purge (air blow) (third step).

Then, the sequential second step, temperature keeping step, and third step of heating by microwave irradiation and temperature keeping and cooling of the mixture, were repeated again (the number of repetitions: 2), and thereafter, the solvent was substituted with toluene under vacuum, followed by drying at room temperature until the solvent was fully removed, and further drying at 180°C for 4 hours, thereby obtaining a sulfide solid electrolyte powder.

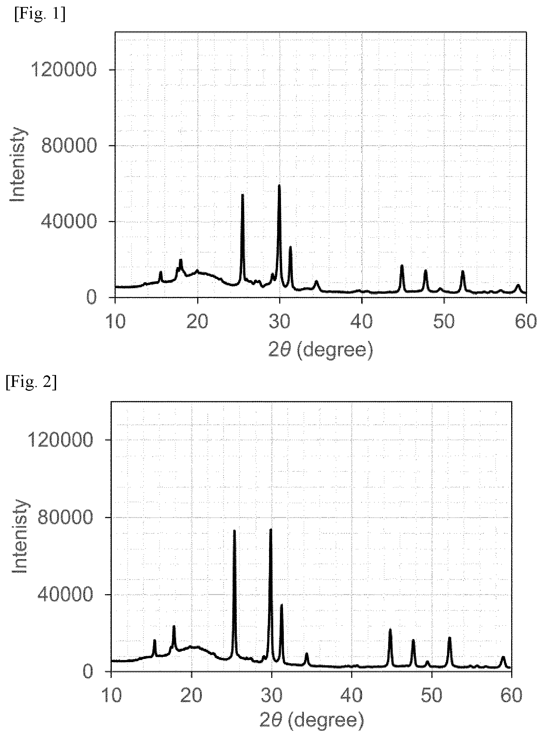

The resulting sulfide solid electrolyte powder was subjected to a powdery XRD measurement by the following method. The result is shown in Fig. 1. In Fig. 1, diffraction peaks derived from an argyrodite-type crystal structure were found at $2\theta=15.5°, 18.0°, 25.0°, 30.0°, 31.4°, 45.3°, 47.0°,$ and $52.0°$.

The ionic conductivity was measured by the following method, and then, was 0.7 mS/cm.

The average particle size was measured by the following method, and then, the average particle size was 2.23 $\mu$m ($D_{50}$) and was almost the same as the average particle size of 2.53 $\mu$m ($D_{50}$) of the $Li_3PS_4$ that was used as a raw material.

(Measurement of ionic conductivity)

In this Example, the ionic conductivity was measured as follows.

Each sulfide solid electrolyte was molded into a circular palette having a diameter of 10 mm (sectional area S: 0.785 $cm^2$) and a height (L) of 0.1 to 0.3 cm to produce a sample. Electrode terminals were attached to the sample from above and below, and measurement was performed by an alternating current impedance method at 25°C (frequency range: 1 MHz to 100 Hz, amplitude: 10 mV) to provide a Cole-Cole plot. The real

part Z' ($\Omega$) at the point at which -Z" ($\Omega$) became the minimum near the right end of an arc observed in a region on the high frequency side was designated as the bulk resistance R ($\Omega$) of the electrolyte, and the ionic conductivity $\sigma$ (S/cm) was calculated according to the following expressions.

$$R = \rho \, (L/S)$$

$$\sigma = 1/\rho$$

(Powdery X-ray diffraction (XRD) measurement)

In the present description, the powdery X-ray diffraction (XRD) measurement was performed as follows.

Each powder obtained in Examples and Comparative Example was charged into a hole having a diameter of 20 mm and a depth of 0.2 mm and was floated with a glass to prepare a sample. This sample was sealed with a Kapton film for XRD and subjected to measurement without contact with air under the following conditions.

> Measurement apparatus: M03xhf (model number, manufactured by Mac Science)
> Tube voltage: 40 kV
> Tube current: 40 mA
> X-ray wavelength: Cu-K$\alpha$ line (1.5418 Å)
> Optical system: focusing method
> Slit configuration: divergence slit 0.5°, scattering slit 0.5°, receiving slit 0.3 mm, using a monochromator
> Detector: semiconductor detector
> Measurement range: 2$\theta$ = 10-60 deg
> Step width, scan speed: 0.05 deg, 10 seconds/step

(Average particle size)

In the present description, the average particle size was measured as follows.

For each powder obtained in Examples and Comparative Example, a particle size at a cumulative volume percentage of 50% ($D_{50}$) was measured using a laser diffraction particle size distribution analyzer ("LA-950 (tradename)", manufactured by HORIBA Ltd.) and was taken as the average particle size.

(Example 2)

A sulfide solid electrolyte was obtained in the same manner as in Example 1 except that the sequential steps from microwave irradiation to cooling in Example 1 were performed three times in total (the number of repetitions of the second step, the temperature keeping step, and the third step: 3).

The resulting sulfide solid electrolyte was subjected to the measurement of the ionic conductivity according to the method described above, and then, was 1.4 mS/cm.

The sulfide solid electrolyte was subjected to the measurement of the average particle size according to the method described above, and then, the average particle size was 2.35 $\mu$m ($D_{50}$).

Further, the resulting sulfide solid electrolyte powder was subjected to the powdery X-ray diffraction (XRD) measurement by the method described above. The result is shown in Fig. 2. As shown in Fig. 2, it was found that the sulfide solid electrolyte obtained in Example 2 also had diffraction peaks derived from an argyrodite-type crystal structure at 2$\theta$=15.5°, 18.0°, 25.0°, 30.0°, 31.4°, 45.3°, 47.0°, and 52.0° as in the case of the sulfide solid electrolyte of Example 1.

(Example 3)

A sulfide solid electrolyte was obtained in the same manner as in Example 1 except that the sequential steps from microwave irradiation to cooling in Example 1 were performed four times in total (the number of repetitions of the second step, the temperature keeping step, and the third step: 4).

The resulting sulfide solid electrolyte was subjected to the measurement of the ionic conductivity according to the method described above, and then, was 2.1 mS/cm.

The resulting sulfide solid electrolyte was subjected to the measurement of the average particle size according to the method described above, and then, the average particle size was 2.34 $\mu$m ($D_{50}$).

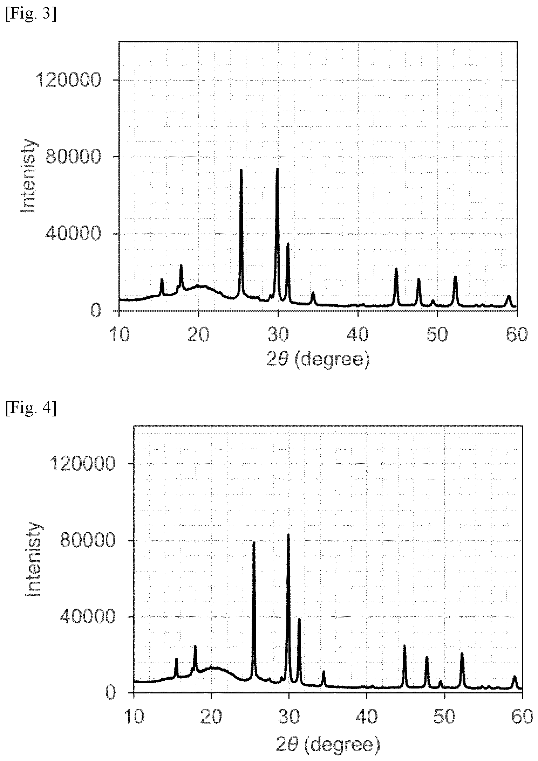

Further, the resulting sulfide solid electrolyte powder was subjected to the powdery X-ray diffraction (XRD) measurement by the method described above. The result is shown in Fig. 3. As shown in Fig. 3, it was found that the sulfide solid electrolyte obtained in Example 3 also had diffraction peaks derived from an argyrodite-type crystal structure at 2$\theta$=15.5°, 18.0°, 25.0°, 30.0°, 31.4°, 45.3°, 47.0°, and 52.0° as in the case of the sulfide solid electrolyte of Example 1.

(Example 4)

A sulfide solid electrolyte was obtained in the same manner as in Example 1 except for performing the microwave irradiation in Example 1 as follows.

The resulting mixture was placed in a microwave irradiation apparatus and microwave irradiation (output: 300 W, frequency: 2.45 GHz) was started, and after the temperature of the mixture reached 300°C, the temperature of the mixture was kept at 300°C for 30 minutes by appropriately changing the output between 0 to 200 W (the apparatus automatically varies the output output (W) for keeping the temperature), then, the microwave irradiation was stopped, and the resulting mixture was cooled to 50°C by air purge (air blow).

Subsequently, the sequential steps from microwave irradiation to cooling were repeated additional two times (the number of repetitions of the second step, the temperature keeping step, and the third step: 3), and thereafter, the solvent was substituted with toluene under vacuum, followed by drying at room temperature until the solvent is fully removed, and further drying at 180°C for 4 hours, thereby obtaining a sulfide solid electrolyte powder.

The resulting sulfide solid electrolyte was subjected to the measurement of the ionic conductivity according to the method described above, and then, was 2.6 mS/cm.

The resulting sulfide solid electrolyte was subjected to the measurement of the average particle size according to the method described above, and then, the average particle size was 2.18 $\mu$m ($D_{50}$).

Further, the resulting sulfide solid electrolyte powder was subjected to the powdery X-ray diffraction (XRD) measurement by the method described above. The result is shown in Fig. 4. As shown in Fig. 4, it was found that the sulfide solid electrolyte obtained in Example 4 also had diffraction peaks derived from an argyrodite-type crystal structure at $2\theta$=15.5°, 18.0°, 25.0°, 30.0°, 31.4°, 45.3°, 47.0°, and 52.0° as in the case of the sulfide solid electrolyte of Example 1.

(Comparative Example 1)

A sulfide solid electrolyte was obtained in the same manner as in Example 1 except that the sequential steps from microwave irradiation to cooling in Example 1 were performed only once (the number of repetitions of the second step, the temperature keeping step, and the third step: 1).

The resulting sulfide solid electrolyte was subjected to the measurement of the ionic conductivity according to the method described above, and then, was 0.4 mS/cm.

The resulting sulfide solid electrolyte was subj ected to the measurement of the average particle size according to the method described above, and then, the average particle size was 2.28 $\mu$m ($D_{50}$).

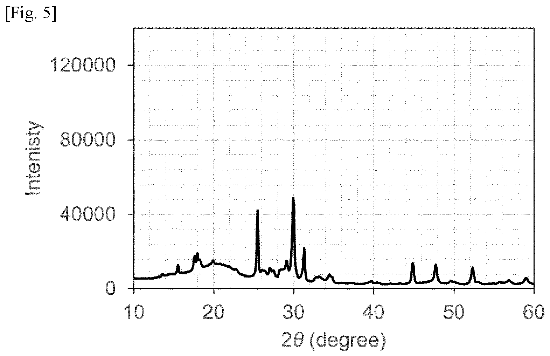

Further, the resulting sulfide solid electrolyte powder was subjected to the powdery X-ray diffraction (XRD) measurement by the method described above. The result is shown in Fig. 5. As shown in Fig. 5, such diffraction peaks derived from an argyrodite-type crystal structure as found in the powders obtained in Examples were not found for the powder obtained in Comparative Example 1.

Industrial Applicability

According to the production method of this embodiment, it is possible to adopt a liquid phase method with a lowered heating temperature and to efficiently produce a sulfide solid electrolyte having a particle size maintained by suppressing granulation caused by heating. A sulfide solid electrolyte obtained by the production method of this embodiment is suitably used for a battery, above all, a battery used in information-related devices, communication devices, and so on, such as personal computers, video cameras, and mobile phones.

**Claims**

1. A method for producing a sulfide solid electrolyte, the method comprising

   a first step of mixing a raw material-containing substance that contains a lithium atom, a phosphorus atom, a sulfur atom, and a halogen atom in an organic solvent to prepare a mixture,
   a second step of irradiating the mixture with a microwave of 0.5 to 700 W/g to heat the mixture to 50 to 360°C, and
   a third step of cooling the mixture to 20 to 70°C, the second and third steps being repeated 2 to 50 times.

2. The method for producing a sulfide solid electrolyte according to claim 1, the method comprises, after the second step, a temperature keeping step of irradiating the mixture with a microwave to keep a temperature of 80 to 360°C for 1 to 300 minutes, which is followed by the third step.

3. The method for producing a sulfide solid electrolyte according to claim 1 or 2, wherein the organic solvent has a dielectric loss factor at 25°C of 10.0 or less.

4. The method for producing a sulfide solid electrolyte according to any one of claims 1 to 3, wherein the organic solvent has a boiling point of 50°C or higher.

5. The method for producing a sulfide solid electrolyte according to any one of claims 1 to 4, wherein the organic solvent is an aromatic solvent.

6. The method for producing a sulfide solid electrolyte according to any one of claims 1 to 5, wherein the raw material-containing substance is contained in the mixture in an amount of 1% by mass or more and 20% by mass or less.

7. The method for producing a sulfide solid electrolyte according to any one of claims 1 to 6, wherein in the second step, the mixture is irradiated with a microwave of 130 to 700 W/g.

8. The method for producing a sulfide solid electrolyte according to any one of claims 1 to 7, wherein in the second step, the mixture is heated to 150 to 360°C.

9.  The method for producing a sulfide solid electrolyte according to any one of claims 2 to 8, wherein in the temperature keeping step, the mixture is kept at a temperature of 150 to 360°C.

10. The method for producing a sulfide solid electrolyte according to any one of claims 2 to 9, wherein in the temperature keeping step, the mixture is kept at the temperature for 1 to 240 minutes.

11. The method for producing a sulfide solid electrolyte according to any one of claims 1 to 10, wherein the second and third steps are repeated 2 to 20 times.

12. The method for producing a sulfide solid electrolyte according to any one of claims 1 to 11, wherein the sulfide solid electrolyte is a crystalline sulfide solid electrolyte having an argyrodite-type crystal structure.

[Fig. 1]

[Fig. 2]

[Fig. 3]

[Fig. 4]

[Fig. 5]

## INTERNATIONAL SEARCH REPORT

| International application No. |
|---|
| **PCT/JP2023/035340** |

**A. CLASSIFICATION OF SUBJECT MATTER**

*H01B 13/00*(2006.01)i; *C01B 25/14*(2006.01)i; *H01G 11/56*(2013.01)i; *H01M 10/0562*(2010.01)i
FI: H01B13/00 Z; C01B25/14; H01G11/56; H01M10/0562

According to International Patent Classification (IPC) or to both national classification and IPC

**B. FIELDS SEARCHED**

Minimum documentation searched (classification system followed by classification symbols)

    H01B13/00; C01B25/14; H01G11/56; H01M10/0562

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-95953 A (IDEMITSU KOSAN CO., LTD.) 18 June 2020 (2020-06-18) | 1-12 |
| A | JP 2021-158120 A (IDEMITSU KOSAN CO., LTD.) 07 October 2021 (2021-10-07) | 1-12 |
| A | JP 2020-15661 A (TOYOTA MOTOR ENGINEERING & MANUFACTURING NORTH AMERICA, INC.) 30 January 2020 (2020-01-30) | 1-12 |
| A | JP 2015-146299 A (TOKYO ELECTRIC POWER CO., INC.) 13 August 2015 (2015-08-13) | 1–12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 December 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/035340**

| Patent document cited in search report | | | Publication date (day/month/year) | Patent family member(s) | | | Publication date (day/month/year) |
|---|---|---|---|---|---|---|---|
| JP | 2020-95953 | A | 18 June 2020 | US | 2022/0311049 | A1 | |
| | | | | US | 2020/0185767 | A1 | |
| JP | 2021-158120 | A | 07 October 2021 | JP | 6882620 | B1 | |
| | | | | US | 2023/0021458 | A1 | |
| | | | | WO | 2021/132173 | A1 | |
| | | | | EP | 4084019 | A1 | |
| | | | | CN | 114868210 | A | |
| JP | 2020-15661 | A | 30 January 2020 | US | 2020/0030768 | A1 | |
| | | | | EP | 3599659 | A1 | |
| | | | | CN | 110783567 | A | |
| JP | 2015-146299 | A | 13 August 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017159667 A
- JP 2014191899 A
- WO 2014192309 A
- WO 2018054709 A
- JP 2020015661 A
- JP 2013016423 A

**Non-patent literature cited in the description**

- *CHEMISTRY OF MATERIALS*, 2017 (29), 1830-1835
- *Journal of Materials Chemistry A*, 2018 (6), 21261-21265
- *Journal of Materials Chemistry A*, 2018 (9), 400-405
- **KANNO et al.** *Journal of The Electrochemical Society*, 2001, vol. 148 (7), A742-746
- *Solid State Ionics*, 2006, vol. 177, 2721-2725